# EUROPÄISCHE PATENTSCHRIFT

(11) **EP 0 891 850 B1**
(45) Veröffentlichungstag und Bekanntmachung des Hinweises auf die Patenterteilung: **12.12.2001**
(21) Anmeldenummer: 98111386.3
(22) Anmeldetag: 20.06.1998
(51) Int. Cl.: B29C 43/42, B29C 33/48, B29C 33/44

(54) **Verfahren zur Herstellung eines Hohlkörpers aus Kunststoff**
Method for producing a plastics hollow object
Procédé pour la fabrication d'un objet creux en matière plastique

(30) Priorität: 15.07.1997 DE 19730207
(43) Veröffentlichungstag der Anmeldung: 20.01.1999
(73) Patentinhaber: KSB Aktiengesellschaft, 67227 Frankenthal (DE)
(72) Erfinder: Schreyer, Horst, 91217 Hersbruck (DE); Prechtl, Wolfgang, 92237 Sulzbach-Rosenberg (DE); Zuber, Dietmar, 95176 Konradsreuth (DE)

(56) Entgegenhaltungen:
- EP-A- 0 404 713
- DE-A- 2 145 006
- DE-A- 3 203 185
- FR-A- 1 173 071
- GB-A- 1 249 945
- US-A- 3 140 327
- US-A- 5 114 657
- US-A- 5 378 416
- PATENT ABSTRACTS OF JAPAN vol. 007, no. 024 (M-189), 29. Januar 1983 & JP 57 178715 A (KYOKUTO KIKAI SEISAKUSHO KK), 4. November 1982

## Beschreibung

Gegenstand der Erfindung ist ein Verfahren zur Herstellung eines Hohlkörpers aus Kunststoff, welcher einen oder mehrere radial verlaufende Hohlräume besitzt, die sich innerhalb beiderseits axial geschlossener Wände befinden.

Für die Fertigung von Hohlkörpern der eingangs genannten Art sind verschiedene Verfahren bekannt:

Bei Gegenständen, die in hohen Stückzahlen zu fertigen sind, hat sich vor allem das Spritzgießverfahren durchgesetzt. Wegen der hohen Werkzeugkosten ist dieses Verfahren für geringere Stückzahlen aber nicht empfehlenswert. Im übrigen ist es Bedingung für die Anwendung dieses Verfahrens, daß der verwendete Kunststoff eine nicht zu hohe Schmelzviskosität besitzt. So ist beispielsweise ultrahochmolekulares Polyethylen nicht mit Hilfe des Spritzgießverfahrens zu verarbeiten.

Gemeinsames Merkmal der übrigen Verfahren zur Herstellung von Hohlkörpern der in Rede stehenden Art ist die Fertigung einzelner Teile, die anschließend zu dem Hohlkörper zusammengefügt werden. Ein solches Einzelteil kann zum Beispiel durch spanabhebende Formgebung aus einem Kunststoffhalbzeug entstehen.

Eine andere, durch die DE 42 41 757 A1 bekannte Möglichkeit zur Erzeugung solcher Teile besteht darin, diese durch Formpressen zu fertigen, In der genannten Druckschrift wird ein Verfahren zur Herstellung von Formkörpem aus pulverförmigem ultrahochmolekularem Polyethylen gelehrt, bei dem das Polymerisat in einer Preßform zunächst erhitzt und darauf unter Druck auf Raumtemperatur abgekühlt wird.

Nach dem Fügen der Einzelteile erfolgt deren Verbinden zu einem gemeinsamen Ganzen mittels einer der auch bei anderen Materialien grundsätzlich geläufigen Techniken: Kleben, Schweißen, Schrauben usw.

Bei den vorstehend beschriebenen Verfahren fällt ins Auge, daß sie sehr aufwendig sind. Vor allem erfordern sie in hohem Maße den Einsatz qualifizierten Personals, da die arbeitsintensiven Herstellungsprozesse eine Reihe von Fehlermöglichkeiten bergen.

Durch die DE 41 42 668 A1 ist auch bereits ein Vorrichtung zur Formung von Kunststoffgranulat bekannt, mit dessen Hilfe muffenförmige Gegenstände in einer Preßform zu erzeugen sind. In die Preßform wird ein Kern eingesetzt, der über die Höhe des zu erzeugenden Gegenstands hinausragt und der nach dem Formvorgang axial zur Preßrichtung aus dem Preßling herausgezogen wird. Die in der Druckschrift vermittelte Lehre ist bei Gegenständen, die radial verlaufende, beiderseits axial geschlossene Hohlräume besitzen, nicht anwendbar, da ein über die Kontur der Öffnung des Preßlings radial hinausreichender Kern nicht entformbar wäre.

Die US 3 140 327 A schließlich lehrt ein Verfahren zur Herstellung von Faltenbälgen durch Sintem von Kunststoffpulver, bei dem in eine Form abwechselnd das Kunststoffpulver und eine vorbestimmte Anzahl von Distanzscheiben eingefüllt werden. Die in zwei alternativen Formen gestalteten Distanzscheiben liegen abwechselnd an der Innenwand der Form und an einem in die Form eingefügten Kern dicht an; sie sind somit radial fixiert. Aufgrund ihrer spezifischen Form belassen sie einmal zu dem Kern und einmal zu der Innenwand einen freien Raum. Beim Sintern des Kunststoffpulvers bilden die Distanzscheiben jeweils eine Trennschicht. Zwischen den verschiedenen Trennschichten entsteht somit die im Querschnitt zickzackförmig verlaufende Wand eines Faltenbalges. Nach dem Sintern sind die Distanzscheiben durch Zerstörung aus dem Faltenbalg zu entfernen. Die Dicke der Faltenbalgwand wird bestimmt durch die jeweils zwischen zwei Distanzscheiben befindliche Menge an Kunststoffpulver. Diese Menge wiederum wird durch das Einfüllen einzelner Portionen in die Form erbracht. Die Distanzscheiben schwimmen also zwischen den einzelnen Pulverschichten. Da die Räume zwischen den Distanzscheiben offen bleiben, ist während des Erhitzungs- und Preßvorgangs ein Übertritt von Kunststoffmaterial zwischen den offenen Räumen und eine axiale Verlagerung der Distanzscheiben nicht auszuschließen. Dies führt zumindest zu ungleichmäßigen Wandstärken bei dem fertigen Faltenbalg.

Der Erfindung liegt die Aufgabe zugrunde, eine mit geringen Aufwand verbundene Herstellung eines Kunststoffkörpers mit einem oder mehreren radial verlaufenden Hohlräumen zu ermöglichen, wobei auf eine hohe Güte des fertigen Produktes Wert gelegt wird.

Diese Aufgabe löst erfindungsgemäß ein Verfahren zur Herstellung eines Hohlkörpers aus Kunststoff, welcher einen oder mehrere radial verlaufende Hohlräume besitzt, die sich innerhalb beiderseits axial geschlossener Wände befinden, wobei das aus Pulver oder Granulat bestehende Kunststoffmaterial zusammen mit einer Innenform, welche in einer Außenform axial und radial fixiert wird, in eine Preßform gefüllt, dort erhitzt und in einem anschließenden Preßvorgang zu dem Hohlkörper geformt wird, und wobei die Innenform nach dem Preßvorgang aus dem fertigen Hohlkörper entfernt wird.

Im Prinzip handelt es sich hier um eine bewährte Technik, wie sie in ähnlicher Weise beim Gießen von Metallen seit langem angewendet wird. Die beim Pressen von Kunststoffmaterial zu verwendenden Innenformen können tatsächlich den in der Metallgießerei üblichen Kernen entsprechen. So können insbesondere Kerne verwendet werden, die durch Zerstörung aus dem fertigen Hohlkörper entfernt werden. Von Vorteil kann es jedoch sein, wenn die Innenform aus einer festen, mehrfach geteilten wiederverwendbaren Form besteht. Durch die axiale Fixierung der Innenform wird eine Verlagerung während des Preßvorganges ausgeschlossen.

Das erfindungsgemäße Verfahren ist wegen der geringen Investitionskosten insbesondere für die wirtschaftliche Herstellung kleiner Fertigungslos-Stückzahlen geeignet. Vor allem aber eignet es sich für den Einsatz bei der Fertigung von Hohlkörpern aus Kunststoffen mit hoher Schmetzviskosität, die eine Anwendung des Spritzgießverfahrens nicht erlauben.

So lassen sich mit Hilfe des erfindungsgemäßen Verfahrens geschlossene Kreiselpumpenlaufräder herstellen, deren Schaufeln eine optimale hydraulische Formgebung besitzen. Die hier zu verwirklichenden räumlich gekrümmten Laufradschaufeln konnten bislang nur mit hohem mechanischen Bearbeitungsaufwand oder, wenn es sich um ein durch Spritzgießen zu verarbeitendes Kunststoffmaterial handelte, mit aufwendigen Werkzeugen hergestellt werden.

Anhand eines Ausführungsbeispiels wird die Erfindung näher erläutert. Die Zeichnung zeigt in
- Fig. 1: einen Axialschnitt durch eine mit einem eingelegten Kern versehene, in der Füllstellung befindliche Preßform zur Herstellung eines Kreiselpumpenlaufrades mittels des erfindungsgemäßen Verfahrens,
- Fig. 2: die Preßform der Fig. 1 in der Preßstellung,
- Fig. 3: einen Radialschnitt durch die Preßform und den in sie eingelegten Kern.

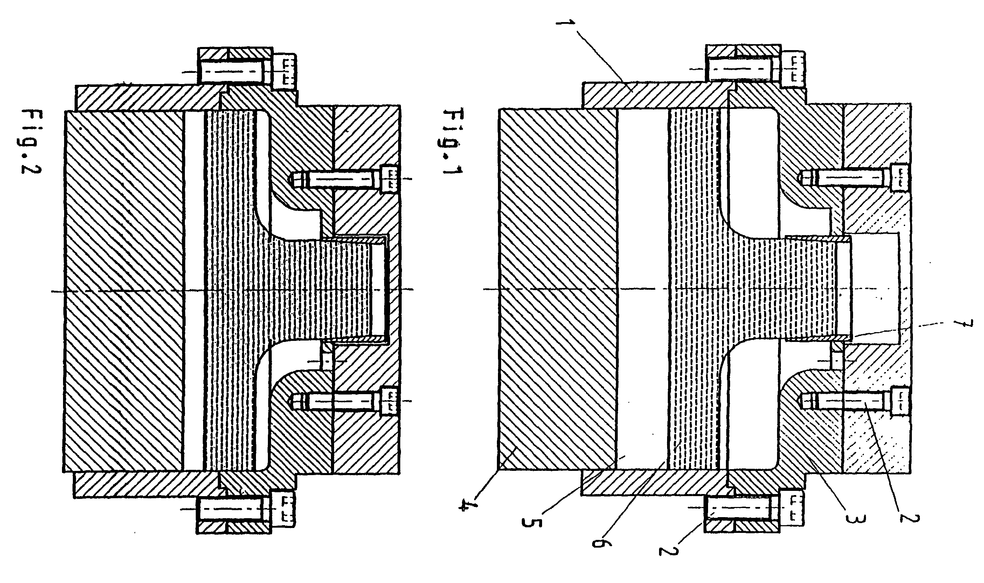

Die in den Fig. 1 und 2 dargestellte Preßform 1 besteht aus vier Einzelteilen, von denen drei mittels Schrauben 2 zu einem Gehäuse 3 zusammengefügt sind. Viertes, unabhängiges Teil der Preßform 1 ist ein Stempel 4, der in das Gehäuse 3 einzusetzen und dort axial zu verschieben ist.

Bei der Preßform 1 handelt es sich um eine einfach gestaltete, mit geringem Aufwand herzustellende Vorrichtung. Sie kann in einer auch für andere Zwecke zu verwendenden, handelsüblichen Presse eingesetzt werden.

In den von dem Gehäuse 3 gebildeten Innenraum 5 der Preßform 1 ist eine aus einem Kern 6 bestehende Innenform eingefügt. Mit seinem - in der Zeichnung unteren - breiten Teil wird der Kem 6 durch die Wand des Gehäuses 3 geführt. Auf den - oberen - schmalen Teil des Kerns 6 ist eine aus Metall bestehende Hülse 7 aufgeschoben, welche ihrerseits ebenfalls durch die Wand des Gehäuses 3 geführt wird. Die Hülse 7 definiert einen Anschlag, bis zu dem der mit ihr verbundene Kem 6 innerhalb des Gehäuses 3 zu verschieben ist.

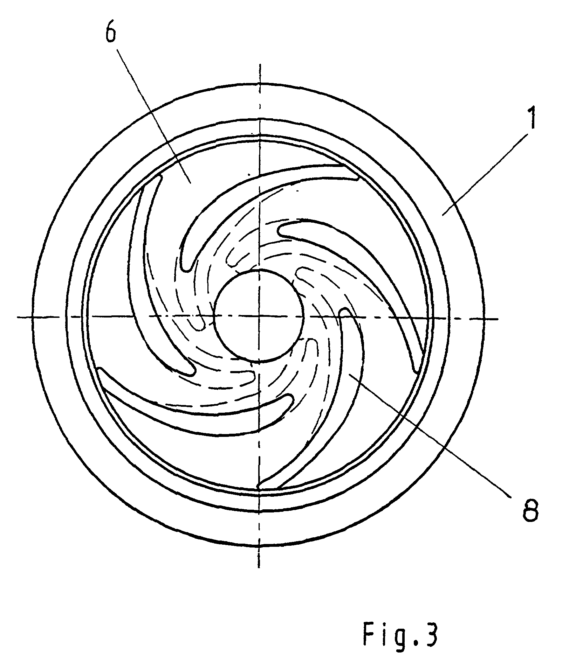

Aus dem Radialschnitt der Fig. 3 ist erkennbar, daß der Kern 6 mit mehreren gleichmäßig über den Umfang verteilten Ausnehmungen 8 versehen ist. In den Ausnehmungen 8 werden die Schaufeln des mit Hilfe der Preßform 1 herzustellenden Laufrades gebildet. Die zwischen den Ausnehmungen 8 vorhandenen Bereiche 9 werden von dem Kem 6 freigehalten, sie bilden als Hohlräume die Förderkanäle des fertigen Laufrades.

### Bei der Fertigung des Laufrades wird wie folgt vorgegangen:

Zunächst wird die Preßform 1 in eine zur Abbildung der Fig. 1 umgekehrte Position gebracht. In die nach oben weisende Öffnung des Gehäuses 3 wird eine vorbestimmte Menge von pulverförmigem Kunststoff eingefüllt. Hierauf wird der in das Gehäuse 3 eingeschobene Kern 6 gelegt Nun wird weiteres Kunststoffmaterial in das Gehäuse 3 eingefüllt, wobei die Ausnehmungen 8 des Kems 6 vollständig von diesem Material ausgefüllt werden. Die Füllung des Gehäuses 3 erfolgt bis zu einer vorgegebenen, durch Erfahrung bestimmten Höhe.

Nach abgeschlossener Befüllung wird der Stempel 4 in das Gehäuse 3 eingesetzt, die Preßform 1 wird in die in der Fig. 1 dargestellte Position gedreht. Nach dem nun folgenden Aufheizen der Preßform 1, welches in einem Ofen oder durch eine an die Preßform 1 angelegte Heizvorrichtung vorgenommen werden kann, wird die Preßform 1 in eine Presse gelegt und der Preßvorgang eingeleitet. Hierbei erfolgt eine Verdichtung der im Innenraum 5 des Gehäuses 3 befindlichen Füllung. Der innerhalb des Kunststoffmaterials befindliche Kem 6 wird, geführt durch seine Wandung und durch die Hülse 7, nach oben verschoben. Der Kem 6 erreicht seine für den Preßvorgang gültige Fixposition, wenn die Hülse 7 an der Wand des Gehäuses 3 zur Anlage kommt. Die Fig. 2 zeigt die beim Preßvorgang eingenommenen Endstellungen von Kern 6 und Stempel 4.

Die in der Fig. 2 gezeigte Preßstellung wird beibehalten, bis die Preßform 1 abgekühlt ist. Darauf erfolgt das Ausformen des Laufrades aus seiner Außenform, dem Gehäuse 3, und seiner Innenform, dem Kern 6, der bei diesem Vorgang zerstört wird.

Die hier dargestellte Ausführung des erfindungsgemäßen Verfahrens kann selbstverständlich abgewandelt werden. So kann statt der einfach gestalteten separaten Preßform eine aufwendigere, in eine Preßvorrichtung integrierte Preßform verwendet werden. Statt des verlorenen, zu zerstörenden Kems kann je nach Möglichkeit und Bedarf auch eine wiederverwendbare Innenform eingesetzt werden.

Ebenso können das verwendete Kunststoffmaterial und der Ablauf der einzelnen Verfahrensschritte in Anpassung an sich ergebende Notwendigkeiten und Möglichkeiten innerhalb des durch die Erfindung vorgegebenen Rahmens abgewandelt werden.

## Patentansprüche

1. Verfahren zur Herstellung eines Hohlkörpers aus Kunststoff, welcher einen oder mehrere radial verlaufende Hohlräume besitzt, die sich innerhalb beiderseits axial geschlossener Wände befinden, wobei das aus Pulver oder Granulat bestehende Kunststoffmaterial zusammen mit einer Innenform (6), welche in einer Außenform (3) axial und radial fixiert wird, in eine Preßform (1) gefüllt, dort erhitzt und in einem anschließenden Preßvorgang zu dem Hohlkörper geformt wird, und wobei die Innenform (6) nach dem Preßvorgang aus dem fertigen Hohlkörper entfernt wird.

2. Vorrichtung zur Durchführung des Verfahrens nach Anspruch 1, **dadurch gekennzeichnet, daß** die Innenform (6) aus einem oder mehreren Kernen besteht, welche nach dem Preßvorgang zerstört werden.

3. Vorrichtung zur Durchführung des Verfahrens nach Anspruch 1, **dadurch gekennzeichnet, daß** die Innenform (6) aus einer festen, mehrfach geteilten wiederverwendbaren Form besteht.

4. Verwendung eines Verfahrens nach Anspruch 1 oder einem der folgenden Ansprüche zur Herstellung geschlossener Kreiselpumpenlaufräder.

## Claims

1. Method for producing a plastics hollow object, which has one or more radially extending chambers which are located within walls closed axially on both sides, a compression mould (1) being filled with the plastics material comprising powder or granules together with an inner mould (6), which is fixed axially and radially in an outer mould (3), the said material being heated in the said compression mould and moulded in a subsequent compressing operation to form the hollow object, and the inner mould (6) being removed from the finished hollow object after the compressing operation.

2. Apparatus for carrying out the method according to Claim 1, **characterized in that** the inner mould (6) comprises one or more cores, which are destroyed after the compressing operation.

3. Apparatus for carrying out the method according to Claim 1, **characterized in that** the inner mould (6) comprises a fixed, multiply split reusable mould.

4. Use of a method according to Claim 1 or one of the following claims for producing closed centrifugal pump impellers.

## Revendications

1. Procédé pour la fabrication d'un corps creux en matière synthétique qui possède un ou plusieurs creux s'étendant radialement situés à l'intérieur de parois axialement fermées des deux côtés, la matière synthétique constituée de poudre ou de granulés étant introduite dans un moule de pressage (1) en même temps qu'un moule intérieur (6) qui est immobilisé axialement et radialement dans un moule extérieur (3), pour y être chauffée et moulée et former le corps creux dans une opération de pressage qui suit, le moule intérieur (6) étant enlevé du corps creux terminé après l'opération de pressage.

2. Dispositif en vue de la mise en oeuvre du procédé selon la revendication 1, **caractérisé en ce que** le moule intérieur (6) est constitué d'une ou de plusieurs âmes qui sont détruites après l'opération de pressage.

3. Dispositif en vue de la mise en oeuvre du procédé selon la revendication 1, **caractérisé en ce que** le moule intérieur (6) est constitué d'un moule fixe réutilisable en plusieurs parties.

4. Utilisation d'un procédé selon la revendication 1 ou l'une des revendications qui suivent pour la fabrication de rotors fermés de pompes centrifuges.
